# EUROPEAN PATENT SPECIFICATION

(11) **EP 1 021 950 B1**
(45) Date of publication and mention of the grant of the patent: **30.01.2002**
(21) Application number: 00610002.8
(22) Date of filing: 12.01.2000
(51) Int. Cl.: A01K 11/00, A61B 17/06, A61M 27/00

(54) **Tattoo-marking of an animal with multi-edged needles**
Tätowierung von Tieren mit mehrfachkantigen Nadeln
Tatuages des animaux en utilisant des épingles avec multiples arêtes

(30) Priority: 22.01.1999 DK 8999
(43) Date of publication of application: 26.07.2000
(73) Proprietor: SLAGTERIERNES FORSKNINGSINSTITUT, DK-4000 Roskilde (DK)
(72) Inventor: Hagdrup, Claus, 2820 Gentofte (DK); Thogersen, Klaus, 2920 Charlottenlund (DK)

(56) References cited:
- EP-A- 0 269 164
- EP-A- 0 635 240
- GB-A- 2 234 420
- US-A- 4 666 438

## Description

The present invention relates to a replaceable marking element for mounting in a hammer for the tattoo-marking of an animal, which element comprises needles arranged in a predetermined pattern. The invention further relates to a hammer for the tattoo-marking of an animal, which hammer comprises replaceable marking elements with needles arranged in a predetermined pattern.

Before pigs are sent for slaughter, the producer marks them with a supplier number. This is done with a special tattooing hammer with replaceable marking elements, each of which has needles arranged in a pattern corresponding to one figure. Together the figures of the elements form a supplier number. The producer first inks the needles on an ink pad and then administers a brief hammer blow to the animal's rump, so that the needles penetrate a few millimetres into the epidermis/fat layer of the animal and deposit their ink in the indentations so formed. In certain cases the hammer is used without ink.

The mark must be sufficiently clear and robust to permit the supplier number to be read after transportation of the animal to the slaughterhouse. However, this is not always the case where the producer has not taken care to ink the needles or has not accurately executed the tattooing blow.

The purpose of the present invention is to improve the marking elements in the tattooing hammer to improve the probability of clear markings.

The marking element of the invention is characterised in that the needles are multi-edged at the outermost, tapering part intended to be hammered into the animal's skin.

The invention is based on the observation that far clearer marking of animals is obtained when the tattooing needles used are multi-edged at their outermost, tapering part which is hammered into the animal's skin. The result is that far fewer pigs will have partly or wholly illegible supplier number due to insufficient inking of the needles or badly aimed or weak hammer blows.

Particularly clear markings are obtained when needles with few edges are used. According to a preferred embodiment the outermost, tapering part of the needles will therefore be three-, four- or five-edged.

Preferably, three-edged needles are used, whereby the outermost, tapering part will preferably have three edges with similar sidefaces between the edges.

The sidefaces of the outermost, tapering part of the needles will preferably form an angle of between 4 and 20° with the longitudinal axis of the needles.

The outermost, tapering part of the needle will preferably have a length of between 2 and 15 mm and a maximum thickness of between 0.8 and 3 mm.

The marking element according to the invention comprises preferable a block with bores or embedments for the needles in a predetermined pattern representing an alpha-numeric character.

Less force in the tattooing blow is required when marking elements are used which have fewer needles than traditional marking elements. A preferred embodiment of the element according to the invention is therefore characterised in that the number of needles is between 12 and 16, preferably between 13 and 15. If the variation in the number of needles in an alpha-numeric character set is kept within these limits, each character will mainly require the same (and lower) impact force in order to perforate the skin. This will give even more uniform and clear marking than traditional tattoos in which the average number of needles and the variation in the number of needles is greater.

The needles may be round at the part fixed to the marking element to facilitate mounting in the element.

The sidefaces of the outermost, tapering part of the needles will preferably be flat. They may also be concave in order to carry more ink between the edges of the needle. The sidefaces may also be rough or have a porous character, which may increase the quantity of ink available for tattooing.

The needles will preferably have sharp edges suitable for cutting into the skin of the animal and thus presenting a significantly larger cut area than for instance from the use of needles with a circular cross-section at the outermost, tapering part. The needles may be manufactured by traditional techniques, such as the facet-grinding of cylindrical pins.

The hammer according to the invention is characterised in that the needles are multi-edged at the outermost, tapering part intended to be hammered into the animal's skin.

Preferred embodiments of the hammer according to the invention are indicated in Claims 9 and 10.

In the following the invention will be more closely described with reference to the drawings, in which
- fig. 1 shows an embodiment of a marking element according to the invention,
- fig. 2 shows a side view of the same element, and
- fig. 3 shows an embodiment of a tattooing hammer according to the invention with six marking elements mounted on the hammer head.

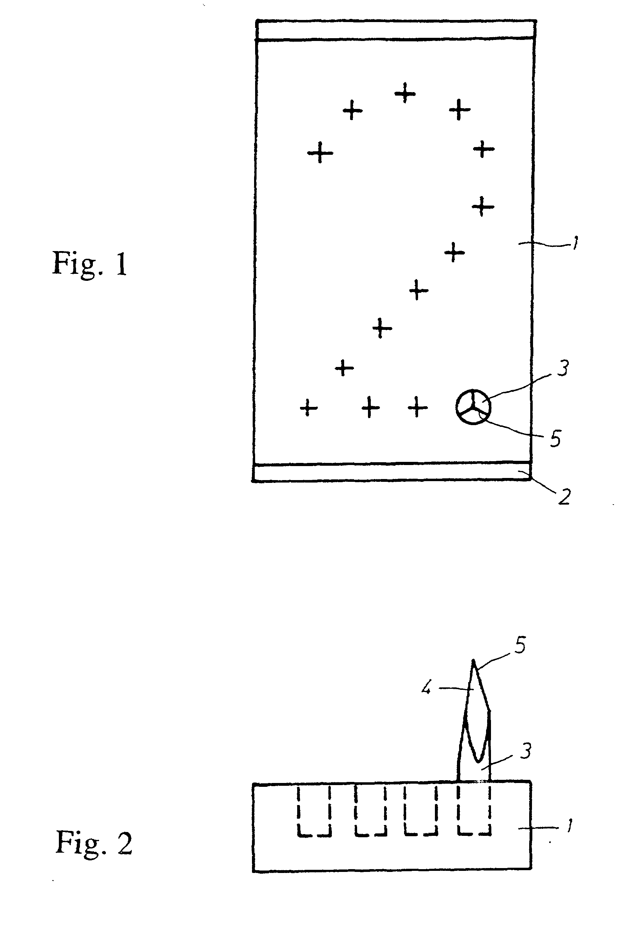

Marking element 1 in figs. 1 and 2 comprises a metal block of approx. 24 x 16 x 5 mm made of, for example, zinc or aluminium. The block has sloping parts 2, which serve to fix the element to a tattooing hammer head. In the block are 14 drilled holes, arranged in a pattern to form the number "2". In each hole a needle 3 is affixed with an outermost, tapering part 4, which has three edges. Only one needle is shown in figs. 1 and 2. The location of the other 13 needles is indicated in fig. 1 by a "+".

The needles 3 are manufactured from 10 mm long, 1.7 mm thick cylindrical steel pins which have been facet-grinded so that the outermost, tapering part 4 has the shape of a three-sided pyramid with sharp edges 5. The sidefaces or facets form an angle with the needle's longitudinal axis of approx. 8-10°. The outermost, tapering part 4 of the needles is 3-4 mm long. In other embodiments the dimensions may vary by up ± 50% compared to the stated dimensions.

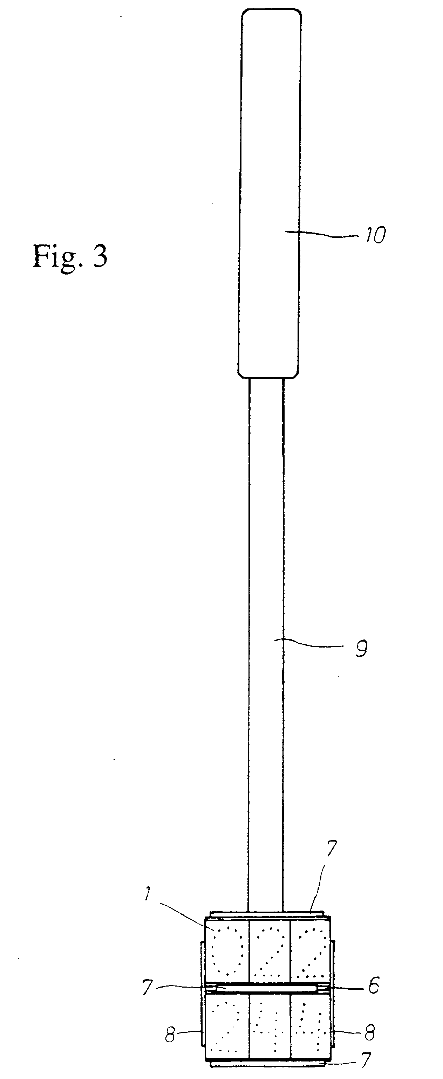

In fig. 3 the marking element together with five other elements has been mounted on the head 6 of a tattooing hammer. Each element 1 has needles arranged in a pattern representing an alpha-numeric character (a number, letter or similar, here the numbers 4, 2 and 0, made up of 13, 14 and 14 needles respectively). The number "022244" formed by the elements is a supplier number.

The elements are fixed by means of clamp rails 7 and held in position laterally by stops 8. The hammer head 6 with marking elements 1 is connected by shaft 9 to a handle 10.

The hammer is used in conventional manner, eg. for marking of pigs before they are sent for slaughter. It may be used in combination with the ink pad described in Danish Patent 169.654 B1 (Slagteriernes Forskningsinstitut) in order to achieve a one-handed system for ink supply and tattooing.

## Claims

1. A replaceable marking element (1) for mounting in a hammer for the tattoo-marking of an animal, which element comprises needles (3) arranged in a predetermined pattern, **characterised in that** the needles (3) are multi-edged at the outermost, tapering part (4) intended to be hammered into the animal's skin.

2. An element according to Claim 1, **characterised in that** the outermost, tapering part (4) of the needles is three-, four- or five- edged.

3. An element according to Claim 1, **characterised in that** the outermost, tapering part (4) of the needles is three-edged with similar sidefaces between the edges (5).

4. An element according to Claim 1, **characterised in that** the sidefaces of the outermost, tapering part (4) of the needles form an angle with the needle's longitudinal axis of between 4 and 20°.

5. An element according to Claim 1, **characterised in that** the outermost, tapering part (4) of the needles has a length of between 2 and 15 mm and a maximum thickness of between 0.8 and 3 mm.

6. An element according to Claim 1, **characterised in that** it comprises a block with bores or embedments for the needles (3) in a predetermined pattern representing an alpha-numeric character.

7. An element according to Claim 1, **characterised in that** the number of needles is between 12 and 16.

8. A hammer for the tattoo-marking of an animal, which hammer comprises replaceable marking elements (1) with needles (3) arranged in a predetermined pattern, **characterised in that**, the needles (3) are multi-edged at the outermost, tapering part (4) intended to be hammered into the animal's skin.

9. A hammer according to Claim 8, **characterised in that** the outermost, tapering part (4) of the needles is three-edged with similar sidefaces between the edges (5).

10. A hammer according to Claim 8, **characterised in that** the number of needles (3) in each marking element (1) is between 12 and 16.

## Patentansprüche

1. Ein ersetzbares Markierungselement (1) zum Montieren in einem Hammer für die Tattoo-Markierung eines Tiers, wobei das Element Nadeln (3) aufweist, die in einem bestimmten Muster angeordnet sind, **dadurch gekennzeichnet, daß** die Nadeln (3) an dem äußersten, konischen Teil (4), das in die Haut des Tiers eingehämmert wird, mehrkantig ausgebildet ist.

2. Ein Element nach Anspruch 1, **dadurch gekennzeichnet, daß** das äußerste, konische Teil (4) der Nadeln drei-, vier- oder fünfkantig ist.

3. Ein Element nach Anspruch 1, **dadurch gekennzeichnet, daß** das äußerste, konische (4) Ende der Nadeln dreikantig mit gleichen Seitenflächen zwischen den Kanten (5) ist.

4. Ein Element nach Anspruch 1, **dadurch gekennzeichnet, daß** die Seitenflächen an dem äußersten, konischen Teil (4) der Nadeln einen Winkel mit der Längsachse der Nadel zwischen 4° und 20° bilden.

5. Ein Element nach Anspruch 1, **dadurch gekennzeichnet, daß** das äußerste, konische Teil (4) der Nadeln eine Länge zwischen 2 - 15 mm und eine maximale Dicke zwischen 0,8 und 3 mm haben.

6. Ein Element nach Anspruch 1, **dadurch gekennzeichnet, daß** es einen Block mit Bohrungen oder Einrichtungen für die Nadeln (3) in einem vorgegebenen Muster aufweist, das ein alpha-numerisches Zeichen wiedergibt.

7. Ein Element nach Anspruch 1, **dadurch gekennzeichnet, daß** die Anzahl der Nadel zwischen 12 - 16 beträgt.

8. Ein Hammer für die Tattoo-Markierung eines Tieres, wobei der Hammer ersetzbare Markierungselemente (1) mit Nadeln (3), die in einem vorgegebenen Muster angeordnet sind, aufweist, **dadurch gekennzeichnet, daß** die Nadeln (3) an ihrem äußersten, konischen Teil (4), das in die Haut des Tieres eingehämmert werden soll, mehrkantig ausgebildet ist.

9. Ein Hammer nach Anspruch 8, **dadurch gekennzeichnet, daß** das äußerste, konische Teil (4) der Nadeln dreikantig mit gleichen Seitenflächen zwischen den Kanten (5) aufweist.

10. Ein Hammer nach Anspruch 8, **dadurch gekennzeichnet, daß** die Anzahl der Nadeln (3) in jedem Markierungselement (1) zwischen 12 und 16 beträgt.

## Revendications

1. Élément de marquage remplaçable (1) destiné à être monté dans un marteau pour le tatouage d'un animal, lequel élément comprend des aiguilles (3) agencées dans une configuration prédéterminée, **caractérisé en ce que** les aiguilles (3) sont polygonales au niveau de la partie effilée la plus à l'extérieur (4) destinée à être martelée dans la peau de l'animal.

2. Élément selon la revendication 1, **caractérisé en ce que** la partie effilée la plus à l'extérieur (4) des aiguilles comporte trois, quatre ou cinq arêtes.

3. Élément selon la revendication 1, **caractérisé en ce que** la partie effilée la plus à l'extérieur (4) des aiguilles comporte trois arêtes avec des faces latérales identiques entre les arêtes (5).

4. Élément selon la revendication 1, **caractérisé en ce que** les faces latérales de la partie effilée la plus à l'extérieur (4) des aiguilles forment un angle avec l'axe longitudinal de l'aiguille compris entre 4 et 20°.

5. Élément selon la revendication 1, **caractérisé en ce que** la partie effilée la plus à l'extérieur (4) des aiguilles a une longueur comprise entre 2 et 15 mm et une épaisseur maximale comprise entre 0,8 et 3 mm.

6. Élément selon la revendication 1, **caractérisé en ce qu'**il comprend un bloc avec des alésages ou des encastrements pour les aiguilles (3) dans une configuration prédéterminée représentant un caractère alphanumérique.

7. Élément selon la revendication 1, **caractérisé en ce que** le nombre des aiguilles est compris entre 12 et 16.

8. Marteau pour le tatouage d'un animal, lequel marteau comprend des éléments de marquage remplaçables ( 1 ) comportant des aiguilles (3) agencées dans une configuration prédéterminée, **caractérisé en ce que** les aiguilles (3) sont polygonales au niveau de la partie effilée la plus à l'extérieur (4) destinée à être martelée dans la peau de l'animal.

9. Marteau selon la revendication 8, **caractérisé en ce que** la partie effilée la plus à l'extérieur (4) des aiguilles comporte trois arêtes avec des faces latérales identiques entre les arêtes (5).

10. Marteau selon la revendication 8, **caractérisé en ce que** le nombre des aiguilles (3) dans chaque élément de marquage (1) est compris entre 12 et 16.
